# EUROPEAN PATENT SPECIFICATION

(11) **EP 4 121 734 B1**
(45) Date of publication and mention of the grant of the patent: **18.12.2024**
(21) Application number: 21714324.7
(22) Date of filing: 16.03.2021
(51) Int. Cl.: G01N 1/22, G01N 1/38

(54) **APPARATUS AND METHOD FOR PROVIDING A REGULATED FILTERED SAMPLE FLOW TO A SENSOR ELEMENT**
GERÄT UND VERFAHREN ZUR BEREITSTELLUNG EINES GEREGELTEN GEFILTERTEN PROBENSTROMS ZU EINEM SENSORELEMENT
APPAREIL ET MÉTHODE POUR FOURNIR UN FLUX D'ÉCHANTILLON FILTRÉ ET RÉGULÉ À UN ÉLÉMENT CAPTEUR

(30) Priority: 16.03.2020 US 202062989915 P
(43) Date of publication of application: 25.01.2023
(73) Proprietor: Olfactomics Oy, 33720 Tampere (FI)
(72) Inventor: KARJALAINEN, Markus, 33720 Tampere (FI); KONTUNEN, Anton, 33720 Tampere (FI); ROINE, Antti, 33800 Tampere (FI); OKSALA, Niku, 33560 Tampere (FI); ANTTALAINEN, Osmo, 50600 Mikkeli (FI)
(74) Representative: Berggren Oy
(86) International application number: PCT/FI2021/050187
(87) International publication number: WO 2021/186108

(56) References cited:
- WO-A1-2005/106450
- US-A1- 2005 253 061
- US-A1- 2006 284 077
- US-A1- 2008 137 065
- US-A1- 2012 329 166
- US-A1- 2017 115 198
- US-B2- 7 812 306
- KONTUNEN ANTON ET AL: "Real Time Tissue Identification From Diathermy Smoke by Differential Mobility Spectrometry", IEEE SENSORS JOURNAL, IEEE, USA, vol. 21, no. 1, 30 July 2020 (2020-07-30), pages 717 - 724, XP011824675, ISSN: 1530-437X, [retrieved on 20201203], DOI: 10.1109/JSEN.2020.3012965
- KONTUNEN ANTON ET AL: "Real Time Tissue Identification From Diathermy Smoke by Differential Mobility Spectrometry", IEEE SENSORS JOURNAL, IEEE SERVICE CENTER, NEW YORK, NY, US, vol. 21, no. 1, 30 July 2020 (2020-07-30), pages 717 - 724, XP011824675, ISSN: 1530-437X, [retrieved on 20201203], DOI: 10.1109/JSEN.2020.3012965

## Description

### TECHNICAL FIELD OF THE INVENTION

The invention is related to particle filters in general. More specifically, the invention is related to an apparatus and method for providing a regulated filtered sample flow for use with a sensor element.

### BACKGROUND OF THE INVENTION

Particle filtering apparatuses may be useful in many applications where e.g. gaseous sample flows are analyzed. Gas phase samples may comprise a variety of constituents, only a portion of which are desirable to e.g. detect. For instance, a sample flow may comprise sample particles which are aimed to be detected with a sensor unit such as an ion mobility spectrometer. The sample flow may additionally comprise e.g. extra particles which are larger than the sample particles, the access of which into a spectrometer or other sensor element is undesirable. The extra particles may interfere with a measurement made by the sensor element and/or they may contaminate the sensor element.

Methods for filtering a sample flow and removing at least a portion of particles from the sample flow are known. These methods may however be inadequate for some purposes, especially where the composition of the sample flow is not known or changes unpredictably. A used sensor element may be sensitive to the received sample flow and known approaches may easily result, in addition or instead of contamination of the sensor element, to saturation of the sensor element by the particles in the filtered sample flow.

One method for filtering a sample flow using ion mobility measurements is described in US 2005/253061 A1.

Another example of an ion filter is described in US 2012/329166 A1 relating to a flow regulating system.

An example of activated carbon filter and high efficiency particle air filter used for measuring concentrations of nanometer or ultrafine particles is described in US 2006/284077 A1.

### SUMMARY OF THE INVENTION

A purpose of the invention is to alleviate at least some of the problems relating to the known prior art. In accordance with one aspect of the present invention, an apparatus is provided according to the independent claim 1.

According to one other aspect, there is provided a method according to the independent claim 11.

Having regard to the utility of the present invention, according to an embodiment, the present invention may provide an apparatus and method for providing a filtered sample flow where the sample flow is regulated based on the concentration of particles in the mixed sample flow, thus regulating a concentration of particles being provided in the filtered sample flow. The regulation may be fast, so that changes occurring in a received sample flow are taken into account quickly.

In some embodiments, the auxiliary flow is an essentially particle-free flow, and the mixed sample flow may be considered as a diluted sample flow.

The concentration of particles in a mixed sample flow may be kept substantially constant or be maintained at or near a predetermined value or within a selected range. The performance of an associated sensor element may be more predictable and/or efficient due to the provision of a regulated filtered sample flow. The number of particles reaching a sensor element may be regulated, whereby a measurement process conducted by the sensor element may not be hindered due to saturation of the sensor element by too many particles being conducted to the sensor element in a given time duration. The amount of particles in a filtered sample flow may still be enough for a measurement to be feasible. Yet, due to the amount of particles being led to a sensor element not being too high, memory effects arising from adherence of the filtered sample flow in e.g. tubing associated with a sensor element may be avoided or reduced.

A sensor element that may be used in connection with the present invention may be e.g. a differential ion mobility spectrometer (DMS), a field asymmetric ion mobility spectrometer (FAIMS), an ion mobility spectrometer (IMS), a travelling wave ion mobility spectrometer (TWIMS), an aspiration ion mobility spectrometer (AIMS), a mass spectrometer (MS), a time of flight mass spectrometer (TOF-MS), an infrared (IR) spectrometer, a photo acoustic spectrometer (PAS), a chemically sensitive sensor array based on e.g. metal oxide semiconductors, conducting polymers, quartz crystal microbalance or surface acoustic wave sensors, and/or any combination of these.

The regulating of the filtered sample flow is provided through use of an auxiliary flow to provide a mixed sample flow. The regulating of the flow rate of the auxiliary flow may provide a simple and/or cost-effective manner of controlling the amount/concentration of particles that is comprised in a sample flow to be filtered and/or provided to a sensor element.

In one embodiment, a corona discharge may be provided by the filter element. The filter element may comprise a corona electrode for generating a corona discharge, where charged particles are formed by charging particles comprised in a sample flow through the corona discharge. The filter element may additionally comprise a collider electrode for generating an electric field between the first and second electrodes for deflecting the charged particles. The charged particles may then be deflected so that through use of the electric field, charged particles having particle size larger than a threshold value may be directed away from particles of interest comprised in the sample flow. Only particles of interest may thereafter be directed to a sensor element.

The obtaining of the filter current may in the aforementioned embodiment be carried out by the filter element determining a current that is induced at least at the collider electrode by at least the charged particles colliding with the collider electrode. This determined filter current is then indicative of a concentration of the charged particles. An indication of the concentration of charged particles in a sample flow to be filtered may then be determined in a simple manner, preferably using components already present in a filter element, without having to separately use other means of determining concentration.

The sample flow may comprise at least first particles and second particles, wherein the filter element is configured to remove at least a portion, preferably essentially all or at least most, of the second particles from the mixed sample flow to provide the filtered sample flow comprising first particles. The first particles may be of smaller size than the second particles, and a classification of particles into first or second particles based on size may be determined by characteristics of the filter element and/or characteristics of the filter element may be tuned or selected so that particles having selected characteristics, such as having size larger than a threshold size, are considered as second particles and then removed from the filtered sample flow.

An apparatus may be configured to obtain the (filter) current essentially continuously or at predetermined time intervals. For instance, a filter unit comprising a collider electrode may be configured measure or monitor a filter current essentially continuously with a current sensor.

The regulation may comprise determining if a change in the obtained determined characteristic is observed and if yes, actuating a change in the auxiliary flow. The regulation may comprise increasing an amount of auxiliary flow if a change in the determined current is indicative of an increase in concentration of particles and decreasing an amount of auxiliary flow if a change in the determined current is indicative of a decrease in concentration of particles. Thus, regulation of the auxiliary flow may be feedback-controlled.

Feedback-controlled regulation of a concentration of particles in the mixed sample flow and filtered sample flow may be provided, so that said concentration may be dynamically adjusted e.g. to an appropriate level or value or may be maintained essentially constant.

The invention may be especially advantageous in systems where a sample flow is to be directed to a sensor element where the composition of the sample flow is not known or changes unpredictably and/or has many variables (e.g. environmental conditions such as temperature) affecting the concentration of the sample flow, which may be difficult to control. It may be desirable to maintain the concentration of particles (at least the particles of interest) at a certain level, but it may not even be known which variables effect the particle concentration. Through embodiments of the invention, a user of the apparatus does not have to take such variables into account, as the concentration of particles in a filtered sample flow may be regulated dynamically by the apparatus.

In one embodiment, the regulating arrangement may comprise at least one closed loop controller, such as proportional-integral-derivative (PID) controller for controlling the auxiliary flow element. A closed loop controller may provide a cost-effective and simple regulation arrangement.

The auxiliary flow element may comprise e.g. a pump and the regulating arrangement may control a valve coupled to said pump.

In embodiments of an apparatus, the regulating arrangement may be configured to obtain measurement data related to the regulated filtered sample flow from a sensor element and additionally use said measurement data in the control of the auxiliary flow element.

Some embodiments of an apparatus may additionally comprise at least one sensor element for receiving the regulated filtered sample flow and providing measurement data.

A filter current may be an aggregate current that is induced at least partly by the particles comprised in the (mixed) sample flow and may additionally comprise constituents arising from other features of the apparatus, such as a corona discharge that may be used in the filter. The calibration may account for a drifting of the filter current that is due to e.g. the drifting of the corona discharge that may occur with time.

The indication of the instrument current may be obtained utilizing a component configured to provide an inductive or capacitive measurement.

The calibration procedure may be initiated at a predetermined time after determining that the instrument has been deactivated. The predetermined time may preferably be between 1-15 s, more preferably 3-8 s.

The exemplary embodiments presented in this text are not to be interpreted to pose limitations to the applicability of the appended claims. The verb "to comprise" is used in this text as an open limitation that does not exclude the existence of unrecited features. The features recited in dependent claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific example embodiments when read in connection with the accompanying drawings.

The previously presented considerations concerning the various embodiments of the apparatus may be flexibly applied to the embodiments of the method mutatis mutandis, and vice versa, as being appreciated by a skilled person.

### BRIEF DESCRIPTION OF THE DRAWINGS

Next the invention will be described in greater detail with reference to exemplary embodiments in accordance with the accompanying drawings, in which:
Figure 1 shows one apparatus according to an embodiment of the invention,
Figure 2 illustrates a more detailed construction of an exemplary filter element according to one embodiment of the invention,
Figure 3 shows an exemplary system for analysing a sample where one embodiment of an apparatus is employed,
Figure 4 illustrates schematically one more system comprising an apparatus for providing a regulated filtered sample flow for a sensor element,
Figure 5 shows a flow chart of a method according to one embodiment of the invention,
Figure 6 gives one more flow chart of a method according to an embodiment of the invention, and
Figure 7 depicts one implementation of a method or functionalities associated with an apparatus according to one embodiment of the invention.

### DETAILED DESCRIPTION

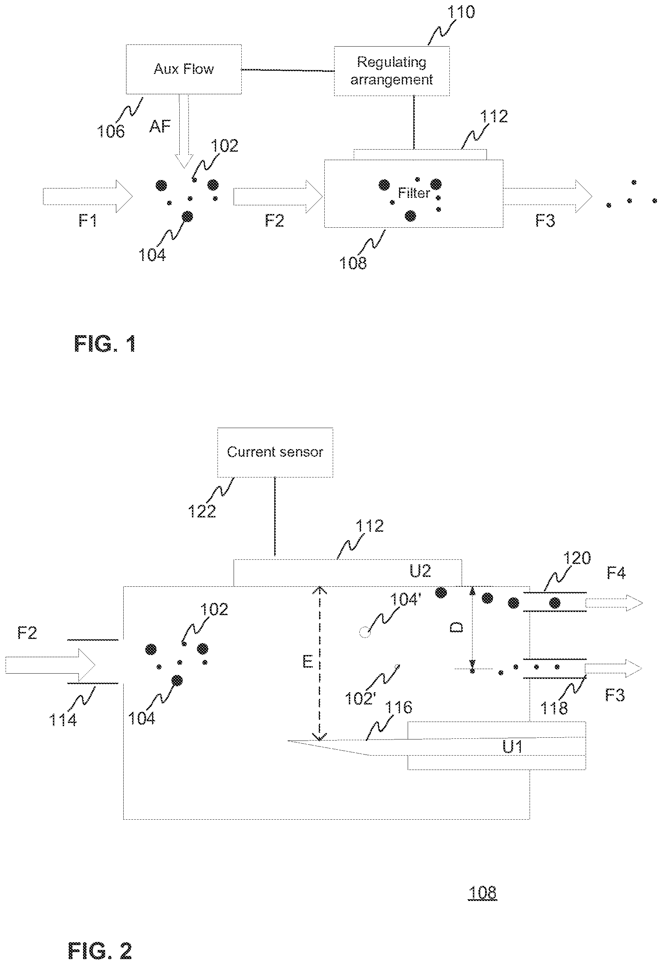

Figure 1 illustrates one exemplary apparatus according to one embodiment of the invention. The apparatus is configured to receive a sample flow F1. The sample flow F1 comprises particles, of which a portion may be first particles 102 which are particles of interest and another portion may be second particles 104, which may be considered as extra particles or contaminating particles.

The sample flow F1 may be received for instance through an inlet comprising e.g. tubing or piping. The sample flow F1 may be a gaseous sample that is obtained through phase transition of a sample not in gaseous phase. The phase transition may be induced through conducting energy to a sample e.g. through conducting electricity, a laser beam, and/or x-rays to the sample, for instance.

The apparatus comprises an auxiliary flow element 106 for providing the received sample flow with an auxiliary flow AF that is essentially particle-free (or at least essentially free of particles corresponding to the first and second particles) to obtain a mixed sample flow F2. The auxiliary flow element 106 may e.g. be a pump and the auxiliary flow AF may be an air flow.

In some embodiments, the auxiliary flow AF may comprise one or more supplementary constituents, such as pure nitrogen. A supplementary constituent may in some embodiments comprise one or more chemical dopants that modulate characteristics of the sample flow to enhance measurement by a sensor e.g. by increasing a measurement signal obtained from compounds of interest or reducing a measurement signal obtained from compounds that are redundant or are not desired to be detected. Yet, supplementary constituents may in some embodiments be used to supply the sensor with a known constituent, e.g. a known calibration gas. The auxiliary flow AF may still be considered to be essentially particle-free in the sense that it does not comprise at least particles corresponding second particles 104, as the used supplementary constituents may still have smaller size than the second particles 104 or may not substantially contribute to the overall concentration of particles in the mixed sample flow F2. Yet, the concentration of the possible supplementary constituents used shall be so low compared to the concentration of the first and/or second particles 102, 104, that the concentration of the supplementary constituents is not taken into account in the method and is considered to be essentially non-existent.

The sample flow F1 thus has a first concentration of particles and the mixed sample flow F2 has a second concentration of particles, the second concentration being smaller than the first concentration.

The mixed sample flow F2 is directed to a filter element 108. The filter element 108 is configured to receive the mixed sample flow F2 and provide a filtered sample flow F3. The filtered sample flow F3 is advantageously essentially free of the second particles 104 (or at least does not comprise second particles 104 exceeding a minimal amount) and comprises the first particles 102. The filtered sample flow F3 may then be provided to a sensor element.

The filter element 108 may provide means for charging the particles 102, 104 of the mixed sample flow F2 and the filtered sample flow F3 may be provided by provision of an electric field in which the charged particles traverse, whereby the charged particles may be deflected so that the second particles 104 are separated from the first particles 102 and only essentially the first particles are allowed to enter the filtered sample flow F3 or form the filtered sample flow F3.

The apparatus additionally comprises a regulating arrangement 110 that is configured to obtain at least one determined characteristic, said characteristic being indicative of a concentration of at least a portion of the particles 102, 104 in the mixed sample flow F2. The regulating arrangement 110 is additionally configured to control the auxiliary flow element and regulate the flow rate of auxiliary flow AF being provided based on the determined characteristic. When the auxiliary flow AF is regulated based on the concentration of particles in the mixed sample flow F2, the provided filtered sample flow F3 will also be regulated consequently.

The regulating arrangement 110 is at least functionally coupled to the filter element 108 and auxiliary flow element 106 and may be arranged as a separate entity from these or the regulating arrangement 110 may be considered as a figurative or functional entity comprising of components or means for carrying out its functioning that may e.g. at least partially be incorporated with or considered to be part of the filter element 108 and/or the auxiliary flow element 106.

The obtained characteristic may be provided by the filter element 108 through measurement relating to charged particles obtained by charging particles 102, 104 of the mixed sample flow F2. The filter element 108 may comprise at least one collider electrode 112 with which the charged particles may collide, leading to a current that the filter element may then be configured to determine. A filter current is then indicative of a concentration of at least a portion of the particles 102, 104 comprised in the mixed sample flow F2 and may be used as or for the determined characteristic. If a rise in the particle concentration of the mixed sample flow occurs, then this will lead to a rise in the filter current, while a decrease in the particle concentration of the mixed sample flow F2 will lead to a decrease in the filter current. The filter current may be directly indicative of the concentration of at least a portion of the particles 102, 104 comprised in the mixed sample flow F2, while the filter current may also be influenced by other features. The portion of the current that is induced by the particles 102, 104 may be termed a signal current, while the filter current may also comprise a corona discharge current induced by a corona discharge as will be disclosed further below.

Advantageously substantially all or at least most of the particles 102, 104 comprised in the mixed sample flow F2 are charged by the filter element 108, but it may be possible that a fraction of the particles 102, 104 remain uncharged.

Based on the determined filter current, the regulating arrangement 110 is configured to control the auxiliary flow element and regulate the flow rate of the auxiliary flow AF, thus regulating the concentration of particles 102, 104 in the mixed sample flow.

The apparatus may be configured to essentially continuously obtain the determined filter current and the regulation may comprise actuating a change in the flow rate of the auxiliary flow if a change in the determined current is observed.

The regulation may comprise increasing an amount/flow rate of auxiliary flow AF if an increase in concentration of particles 102, 104 is observed in the mixed sample flow F2 and decreasing an amount of auxiliary flow AF if a decrease in the concentration of particles 102, 104 is observed in the mixed sample flow F2.

The regulation of an amount or flow rate of the auxiliary flow may comprise regulation of the volumetric flow rate of the auxiliary flow AF.

A concentration of particles 102, 104 in the mixed sample flow is substantially proportionate to the concentration of particles (preferably essentially only first particles 102) comprised in the filtered sample flow F3 and thereby regulation of the auxiliary flow which increases or decreases concentration of particles in the mixed sample flow will regulate the concentration of particles in the filtered sample flow (increase or decrease accordingly).

A feedback-controlled regulation may therefore be provided for control of the concentration of particles in the mixed sample flow (i.e. comprising first particles 102 and second particles 104) and therefore also the filtered sample flow (i.e. comprising substantially only the first particles 102), wherein the concentration of particles may be regulated dynamically and efficiently maintained e.g. at or around a predetermined value.

An increasing an amount of auxiliary flow may occur at a rate that is higher than the decreasing an amount of auxiliary flow. Particles, especially smaller particles (first particles 102) adhere to the surfaces of an apparatus and may exit the filter 106 (in the filtered sample flow F3) at a rate that is lower than the rate at which they enter the filter element 108 (in the mixed sample flow F2). Therefore, if the regulation is asymmetric in the sense that increasing auxiliary flow occurs at a faster rate than decreasing of auxiliary flow, this lingering of particles in the filter element 108 may be accounted/compensated for.

The filtered sample flow F3 may then be directed to a sensor element for measurement and/or analysis purposes.

Figure 2 shows a more detailed construction of an exemplary filter element 108 according to one embodiment of the invention. A filter inlet 114 may receive the mixed sample flow F2 comprising first particles 104 and second particles 104.

The filter element 108 may be configured to charge particles of the mixed sample flow F2 through a corona discharge that is generated at a corona electrode 116, which may e.g. be a needle electrode or a wire electrode. A first voltage U1 may be applied at the corona electrode 116 while a second voltage U2 may applied at the collector electrode 112, leading to an electric field E being generated between the corona electrode 116 and the collector electrode 112. The voltage difference U1-U2 may be so high that a corona discharge occurs near the corona electrode 116, and thereby ionization of the filtered sample flow F2 occurs and particles of the filtered sample flow F2 are charged. Embodiments of a filter element may comprise even more electrodes, e.g. a second collector electrode at an opposing side of the corona electrode 116.

The charged first particles 102' and charged second particles 104' traversing in the electric field E may be deflected and attracted towards the collider electrode 112. The charged particles collide with the collider electrode 112 and lose their charge, returning to the uncharged first and second particles 102, 104. The particles 102, 104 are free to move after the neutralization. The deflection of the charged particles 102', 104' has led to substantially all charged particles 102', 104' being collected at the collector electrode 112, so that a distance D which the particles 102, 104 may traverse after neutralization is dependent on a mass and/or size of the particles 102, 104.

The second particles 104 may have a larger size than the first particles 102 and therefore, the first particles 102 move a larger distance D than the second particles 104. The second particles 104 remain closer to the collider electrode 112 after neutralization, and thus the first particles 102 may be separated from the second particles 104.

The first particles 102 may be directed to a first filter outlet 118, the first particles then being part of the filtered sample flow F3 which may be directed to a sensor unit.

The second particles 104 may be directed to a second filter outlet 120, the second particles being part of a waste flow F4.

The first particles 102 are particles of interest and may be e.g. atoms, molecules, and/or clusters comprising a limited number of molecules, and may be generally considered as gaseous particles, e.g. aerosol particles. The first particles 102 may comprise for instance volatile organic compounds (VOCs).

The second particles 104 are not intended to be analysed with the sensor unit and are generally larger than the first particles 102 and may be e.g. dust particles.

The second particles 104 may have size e.g. larger than 5 nm or 2 nm. Depending on characteristics of the filter element 108 (e.g. strength of the electric field E), particles may have such size that they may be able to enter the filtered sample flow F3. The classification between first particles 102 and second particles 104 thus depends on the filter element 108 and the filter element may be configured in such a way that the first particles 102 have a selected maximum size (such as 5 nm or 2 nm), while particles having size larger than this are then second particles 104 which are directed away from the filtered sample flow F3 (into the waste flow F4).

The filter element 108 may comprise a current sensor 122 that is configured to determine a filter current induced at the collector electrode 112 by at least the charged particles colliding with the collector electrode 112. The filter current is then a determined characteristic that is indicative of a concentration of particles comprised in the filtered sample flow F2.

The current sensor 122 may be configured to transmit or deliver the determined current to the regulating arrangement 110 or the current sensor 122 may be considered to be part of the regulating arrangement 110.

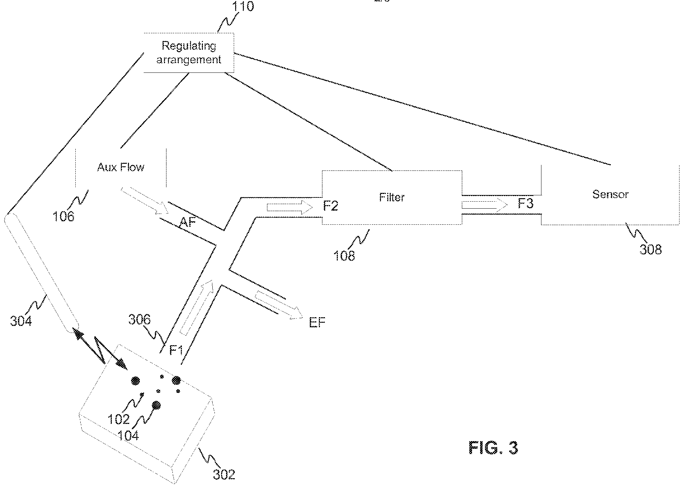

Figure 3 schematically depicts an exemplary system for analysing a sample where one embodiment of an apparatus is employed. The apparatus or system may comprise also other components or features that are not shown in Fig. 3 and all features shown are not drawn to scale. A system may be considered to comprise components which are not comprised in an apparatus but which are advantageously utilized in connection with an apparatus according to the invention. Some embodiments of an apparatus may comprise also components of a system.

The system may be configured to obtain a sample flow F1 from a sample 302. The sample may be a sample that comprises material that is not in gaseous phase, so that the sample 302 as such cannot constitute the sample flow F1. A system may comprise a phase transition inducing instrument 304 that is used to conduct energy to the sample 302 to induce a phase transition of at least a portion of the sample into gaseous phase in order to obtain a sample flow F1 comprising particles 102, 104.

A phase transition inducing instrument 304 may be an instrument that is configured to apply electrical current to the sample 302 to heat the sample. The sample may be e.g. tissue from a biological sample. The sample 302 may be e.g. tissue comprised in a human or animal body or excised tissue. A phase transition inducing instrument 304 may induce the phase transition with or without physical contact with the sample 302.

The sample flow F1 may be received by the apparatus through a sample inlet 306, which may be situated close to the phase transition inducing instrument 304 or may be integral with the phase transition element 304 or at least coupled thereto. The sample inlet 306 may comprise or be associated with e.g. a surgical hoover for facilitating the obtaining of the sample flow F1.

As described hereinbefore, an auxiliary flow element 106 may be used to provide the sample flow F1 with an auxiliary flow AF to produce the mixed sample flow F2, which is directed to a filter element 108 for providing the filtered sample flow F3, which may then be directed to a sensor element 306.

An amount of mixed sample flow F2 that is received by the filter element 108 may be maintained at or near a selected value and may be e.g. between 1 I/min - 1.2 I/min.

The regulating arrangement 110 controls the auxiliary flow element 106 based on an obtained or determined current that is indicative of the concentration of particles 102, 104 in the mixed sample flow F2.

In one embodiment, the regulating arrangement 110 may control the auxiliary flow with at least one closed loop controller, such as a PID controller, fuzzy logic controller, and/or a state space controller, for controlling the auxiliary flow element 106.

The auxiliary flow element 106 may comprise a pump and the regulating arrangement 110 may be configured to control a valve, e.g. proportional valve, coupled to the pump. The controlling of the valve may comprise opening or closing the valve to a certain degree to accomplish the regulation. The valve may be e.g. opened to increase an amount of auxiliary flow and closed to decrease an amount of auxiliary flow when it is determined based on the obtained determined current that such measures should be taken.

In a system such as that depicted in Fig. 3 when used to obtain a sample flow from a sample 302 (e.g. tissue), factors/variables such as environmental conditions, sample quality (such as tissue type), an amount of energy/current being directed to the sample, and/or proximity of the phase transition inducing instrument 304 to the sample 302 may influence the concentration of particles 102, 104 in the obtained sample flow F1. Through the use of an apparatus according to the invention, these factors may be compensated for and a concentration of particles (essentially concentration of the first particles 102) in the filtered sample flow F3 may be regulated in a timely manner.

As shown in Fig. 3, an apparatus may be configured to direct a portion of an obtained sample flow F1 into an exhaust flow EF, where the exhaust flow may be drawn e.g. by using a pump. The exhaust flow may comprise an entire portion of the sample flow F1 (thus not being particle size selective). An exhaust flow EF may in some embodiments also be drawn at other stages, e.g. after addition of the auxiliary flow AF.

In some embodiments the regulating arrangement 110 may be configured to obtain additional information via at least one signal, such as a data signal and/or other type of input from the sensor element 308 and/or the phase transition inducing instrument 304. The additional information may be used in the controlling of the auxiliary flow element 106 and regulation of the auxiliary flow and/or the additional information may be used to control some other functionality of the apparatus and/or system.

An apparatus may be configured to obtain an indication of an instrument current flowing in a phase transition inducing instrument 304. The instrument current may be used e.g. in a calibration process and/or a sampling process. The instrument current may refer to an electric current that is flowing in at least a portion of the instrument. The instrument current may also refer to or be based on a voltage that is determined from the instrument.

The indication of an instrument current may be used to determine that the instrument 304 has been activated or deactivated (turned on or off). This information may be used to initiate a sampling process in a case where it is determined that the instrument 304 has been activated. The initiation of a sampling process may e.g. comprise activation of a surgical hoover or other components that may be used in obtaining a sample flow F1.

An indication of an instrument current may additionally or alternatively be used to trigger a calibration process. If it is determined that an instrument 304 has been deactivated, it may be deduced that a flow that is sampled at or after this time is essentially void of the first particles 102 and second particles 104 which are originating from the sample 302.

A calibration process may be initiated after a predetermined time from observing that an instrument 304 has been deactivated. The observing or determining that the instrument has been deactivated may be carried out through the obtained indication of the instrument current, such as by directly observing a change in the instrument current or observing a change in voltage of the instrument current. The indication of the instrument current may be used to determine that there is essentially no current flowing through the instrument, and thereby that the instrument has been deactivated.

The predetermined time between observing that the instrument has been deactivated and initiating the calibration process may be e.g. between 1-15 seconds, for instance 3-8 seconds. In a calibration process, a filter current may be measured and determined as a baseline filter current, which is a filter current that is obtained when the filter is essentially free of particles 102, 104 originating from the sample 302. The calibration process may be initiated every time it is observed that the instrument is deactivated or the calibration process may be initiated e.g. at pre-determined time intervals (after observing deactivation of the instrument). The calibration process may be carried out e.g. every 1-15 s during which the instrument is deactivated, preferably every 2-5 s, such as about every few seconds. The calibration process may take a few milliseconds to carry out.

The baseline filter current may be useful to determine at times when sample flow F1 comprising particles is not received at the filter element 108 because a determined filter current may drift/change due to a drift occurring in the corona discharge, which could lead to errors in regulation or keeping the mixed sample flow accurately e.g. at a selected level.

A corona discharge current may be in the range of a few microamperes, while a signal current obtained through observing collisions of the charged particles at the collider electrode 112 may be only a small percentage of the corona discharge current, in which case the filter current (a sum of the corona discharge current and signal current) may therefore drift with time due to the changes occurring in the corona discharge. The calibration process may account for the drifting of the corona discharge and associated corresponding portion of the filter current.

The drift or change over time of the corona discharge may be mostly due to heating of the apparatus. Other factors leading to drift of corona discharge may be e.g. contamination of the apparatus and/or air humidity. For instance, heating of an apparatus from room temperature to 70°C may cause an increase of 100% in a current associated with the corona discharge, while long-time contamination may lead to a drop of about 30% in said current.

The indication of the instrument current may be measured by utilizing a component configured to provide an inductive or capacitive measurement. For instance, an inductive loop may be provided around e.g. a cable provided on or attached to the instrument, or the instrument current may in one other example be determined through a capacitive clamp provided at such cable. An inductive measurement/determination of instrument current may generally be more expensive to implement than capacitive measurement. Inductive measurement may, however, give more detailed information indicative of the instrument energy at different times when inducing phase transition of a sample, while capacitive methods may provide less information during the instrument use, as the voltage changes in the instrument during use are not as large as current changes. Yet, when the indication of the instrument current is used to determine when the instrument is activated and/or when the instrument is turned off, the capacitive measurement may provide a simpler and/or more cost-effective way of obtaining information on such activation or deactivation.

In cases where an inductive measurement is utilized to obtain the indication of the instrument current, activation of the instrument and contact of the instrument with e.g. tissue may be observed separately. Here, an apparatus would not have to comprise separate means for determining when electrical current is being directed to a sample 302 via the instrument as this may be done through the e.g. inductive loop. With capacitive measurement/ of instrument current, activation of the instrument may be observed with the capacitive measurement, while contact/interaction with the sample may have to be determined through other means, if this information is desired.

The regulating of the filtered sample flow (by keeping of the concentration of particles in a mixed sample flow substantially constant or maintaining at or near a predetermined value or within a selected range) may therefore be enhanced through the calibration process because the regulating may be carried out by regulation of the filter current and by determining the baseline filter current, preferably at predetermined time intervals, the otherwise possible drift of the filter current may be avoided.

In some embodiments, the regulating arrangement may be configured to initiate or adjust (such as increase) provision of an auxiliary flow AF if it is determined that the concentration of particles in a mixed sample flow exceeds some threshold value. Measurement of the filter current could be indicative of such conditions if the filter current exceeds a threshold value. A threshold value for the filter current could be e.g. between 40-150 nA. In one exemplary embodiment, an auxiliary flow AF is kept essentially nonexistent if the filter current does not exceed the selected threshold value. In this case, before a filter current exceeds the threshold value, the mixed sample flow is essentially void of the auxiliary flow AF. Then, if the filter current exceeds a threshold value, such as 90 nA, the auxiliary flow AF may be provided to maintain the filter current at a selected value, such as the threshold value.

Without the calibration process, it could be that due to the drifting of the corona discharge, the determined filter current (or at least the portion of the filter current corresponding to the mixed sample flow, i.e. a signal current) is larger or smaller than the actual value, and too much or too little of the auxiliary flow would be provided to the mixed sample flow, and the mixed sample flow would either have too small to too large particle concentration. If e.g. the particle concentration is too small, a spectrum obtained by the sensor element 308 may be too weak.

A calibration process may additionally or alternatively compensate for leaks in a filter element 108. The amount of sample flowing into a sensor element 308 may be given as Qin=Qs+Qw-Qd, where Qs is is the (mixed) sample flow, Qw is is a flow that is directed through the filter element into a waste flow, and Qd corresponds to the auxiliary flow AF. The maximum amount of auxiliary flow AF should be such that Qin is always over 0, i.e., at least some amount of sample is directed into the sensor element 308. If a filter element 108 leaks excessively, it could be possible that Qd is large enough that the sensor element 308 does not receive essentially any sample particles.

It could therefore be beneficial to account for possible leaking of the filter element 108 in a calibration process. This may be carried out by increasing the amount of auxiliary flow Qd incrementally and determining a threshold value for Qd beyond which increasing Qd essentially does not lead to any changes in the corona discharge and/or a spectrum obtained via the sensor element 308. It may then be determined that at beyond the threshold value for Qd, Qin<Qw+Qs-Qd. A threshold value for Qd may thus be determined, where Qin=0.

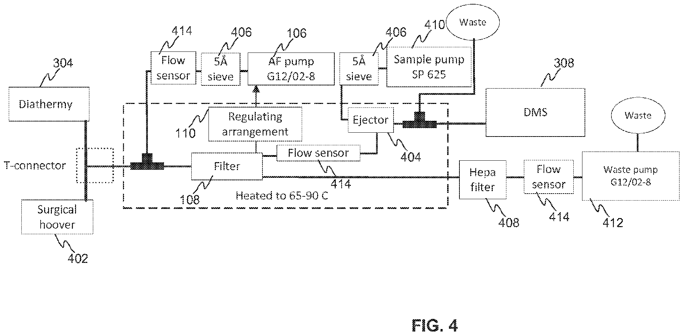

Figure 4 illustrates schematically one more exemplary system comprising an apparatus for providing a regulated filtered sample flow for a sensor element 308, such as a depicted DMS sensor. In Fig. 4, the phase transition inducing instrument 304 is a diathermy knife which is coupled to a surgical hoover 402. A T-connector may be used to couple the diathermy knife 304 and surgical hoover 402 to a sampling unit comprising at least the apparatus comprising a filter element 108, an auxiliary flow element 106 (here an auxiliary flow pump G12/02-8, although various other pumps or corresponding elements may also be employed), and regulating arrangement 110 (as a functional entity or at least as a representation of components/elements arranged to perform the functionalities associated with the regulating arrangement 110).

A system may have additional components that may be useful for handling, filtering, and/or analysing a sample flow, e.g. an ejector 404 for providing the filtered sample flow F3 to the sensor element 308, one or more sieves 406, hepa filters 408, and/or additional pumps 410, 412 for facilitating flow or removing particles, and one or more flow sensors for measuring flow. In some embodiments, also a portion of the filtered sample flow F3 is directed to a second waste flow. At least a portion of a system or arrangement may be heated to e.g. 65-90 °C to aid in maintaining cleanliness of surfaces.

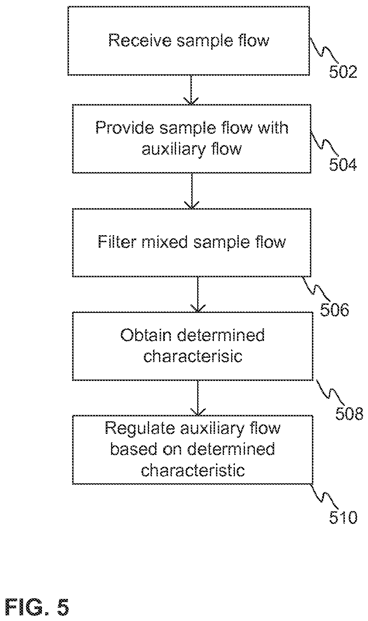

Figure 5 shows a flow chart of a method according to one embodiment of the invention. A sample flow F1 is received at 502, where the sample flow F1 comprises particles 102, 104. The sample flow F1 is provided 504 with an auxiliary flow AF to obtain a mixed sample flow F2. The mixed sample flow F2 is filtered 506 to obtain a filtered sample flow F3. At 508, a determined characteristic is obtained, where the determined characteristic is preferably a current that is indicative of a concentration of particles in the mixed sample flow F2. Based on the determined characteristic, such as current, at 510 the auxiliary flow is finally regulated/controlled to regulate the concentration of particles in the mixed sample flow and the provided filtered sample flow.

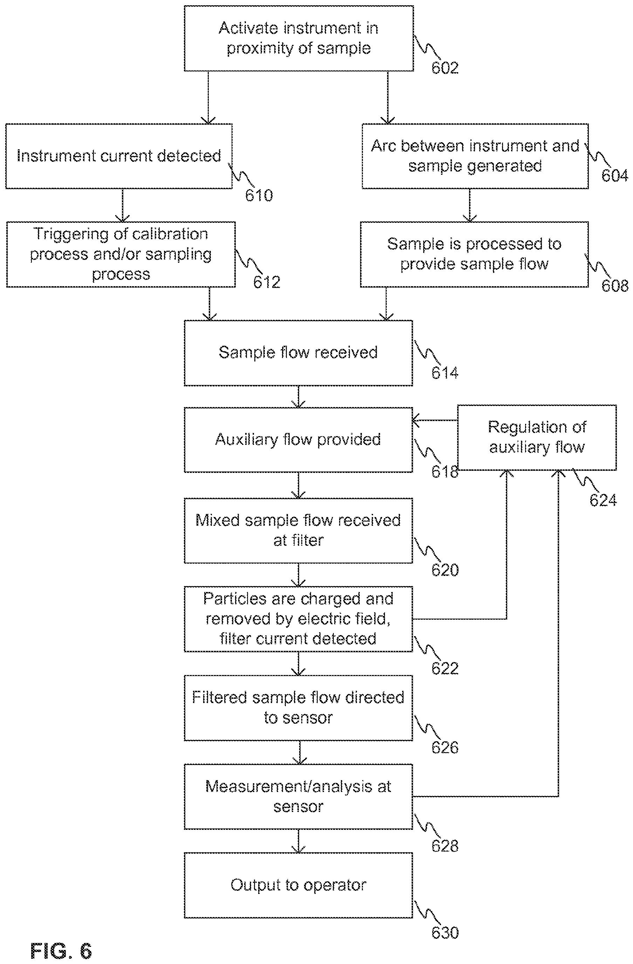

Figure 6 gives one more flow chart of a method according to an embodiment of the invention. The method steps of Fig. 6 may be performed via an apparatus or may be partly performed by entities not comprised in an apparatus, with Fig. 6 giving an exemplary flow chart of a method that utilizes the method steps of the present invention. A phase transition inducing instrument 304 may be activated 602 in the proximity of a sample 302, such as tissue. The activation of the instrument 304 may e.g. be done by an operator of the instrument 304, such as a surgeon, by the operator pressing an activation switch.

An electric arc may be generated 604 between the instrument 304 and the sample 304, which leads to the processing 608 (phase transition) of the sample 302 to provide the sample flow F1 comprising first particles 102 and second particles 104.

The activation 602 of the instrument 304 may also lead to an instrument current being detected 610 and triggering 612 of a calibration process and/or a sampling process.

The sample flow F1 is received 614 at an apparatus and an auxiliary flow F2 is provided 618 with an auxiliary flow element 106 to obtain a mixed sample flow F2. The mixed sample flow F2 is received 620 at a filter element 108.

At 622, the first particles 102 and second particles 104 may be charged and a filter current may be detected, while the mixed sample flow is then filtered by removing second particles 104 through use of an electric field E to provide the filtered sample flow F3.

The detected filter current, being indicative of a concentration of particles 102, 104 in the mixed sample flow, is obtained by a regulating arrangement 110 and at 624, the auxiliary flow is regulated by the regulating arrangement 110 controlling the auxiliary flow AF based on the filter current to regulate the particle concentration of the mixed sample flow F2 and thereby regulate the particle concentration of the filtered sample flow F3.

The filtered sample flow F3 is directed to a sensor element 108 at 626. At the sensor element 308, the filtered sample flow F3 may be measured/analyzed 628.

In some embodiments, an indication of a measurement or analysis conducted at the sensor element 308 may be received by the regulating arrangement 110 and the regulating procedure at 624 may comprise utilization of such additional information.

An output may be provided 630 to an operator of an apparatus, e.g. an operator of the instrument 304. An output may comprise a computer-readable item such as a file and/or an output may provide information for an operator in visual and/or audio means.

An output may be generated by a system comprising at least one processor, where the at least one processor is configured to obtain measurement data from the sensor element 308 and provide analysis data related to the filtered sample flow F3. The analysis data may comprise e.g. classification data obtained by comparison of the measurement data to reference data. The classification data may for instance indicate a classification of the sample 302, such as indicate if the sample 302 comprises fat tissue or muscle tissue. The classification data may be provided through utilizing a machine learning algorithm, such as linear discriminant analysis or a convolutional neural network. An output may be indicative of a certainty of classification data.

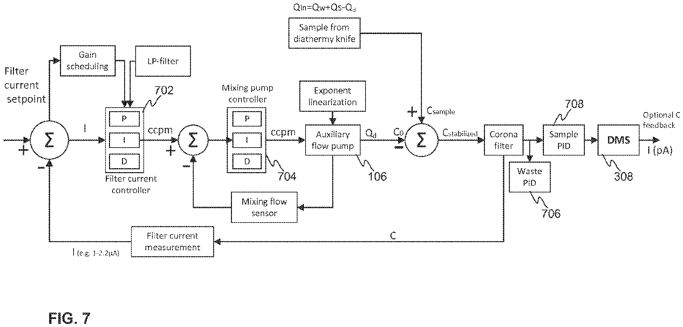

Figure 7 depicts one implementation of a method or functionalities associated with an apparatus according to one embodiment of the invention. A plurality of closed loop controllers may be employed. Four PID control loops are utilized in the example of Fig. 7. An apparatus may also be implemented with other number of control loops, e.g. one PID controller may be used. Control loops may be measured e.g. with a 12-bit analog-to-digital converter.

A first PID controller 702 may be used for filter current control. A filter current setpoint may define a selected concentration of mixed sample flow F2 that is desirable to be maintained via the regulated filtered sample flow F3. Filter current setpoint may in one example be about 1-100 nA. The filter current setpoint may comprise an additional factor which is a baseline filter current, which may e.g. be determined through a calibration procedure. The baseline filter current may e.g. be in the range of 1-3 µA. The measured process value obtained at the first PID controller 702 is a measured filter current.

The control loop associated with the first PID controller 702 may oscillate easily. Particles adhering to the surfaces of an apparatus may lead to particles entering the filter element 108 at a rate that is e.g. 5-10 times higher than the rate at which they exit the filter element 108. Additionally, control loop and motor inertia may cause delays in control which may cause oscillation. Two-loop control could be utilized to account for or compensate the oscillation. Additionally or alternatively, asymmetric regulation of the auxiliary flow may be implemented. A controller output of the first PID controller 702 may utilize a low-pass filter on decreasing concentration gradient (i.e. upon regulating the flow rate of auxiliary flow to compensate for a decrease in particle concentration, meaning a decrease in auxiliary flow rate via the regulation). This may prevent rapid intake of particles on decreasing an auxiliary flow rate.

Additionally or alternatively, gain scheduling could be used to compensate for nonlinearity/oscillation, where asymmetric PI control is used where regulation has different parameters above setpoint and below setpoint.

Cooling of the auxiliary flow AF may in some embodiments be used. Cooler air decreases the filter current, which may in some cases compensate for oscillation effects due to some specific particle species strengthening filter current and some particle species weakening filter current.

At least two PID controllers may be used in a cascaded PID control. The output from the first PID controller 702 may be a setpoint for a second PID controller 704 which may act as a controller for the auxiliary flow element 106. A measured process value obtained in connection with the second PID controller is a measured mixing flow. The measured mixing flow may e.g. be obtained through a flow sensor in connection with the auxiliary flow element 106 that measures an amount of auxiliary flow AF being provided. Exponent linearization may be utilized with the auxiliary flow element 106, here auxiliary flow pump, to compensate for pump nonlinearity.

A third PID controller 706 may control an amount (e.g. volumetric flow rate) of waste flow F4. The waste flow may be controlled to be an essentially constant flow. For instance, in a filter element with a chamber size of about 14 mm x 29 mm, a preferred waste flow may be around 400-1000 cubic centimeters per minute (ccpm).

A fourth PID controller 708 may be utilized to control a flow rate of the filtered sample flow F3. The filtered sample flow may e.g. be controlled to have essentially constant volumetric flow rate, such as around 160-500 ccpm.

In some embodiments, additional information may be obtained from the sensor element 308 and may be used as feedback in the regulating arrangement 110. For example, sensor element feedback may be used in cascaded PID control by a first PID controller obtaining an input from the sensor element 308 to be used in the setpoint value. Such an input could be indicative of a ratio between reactant ions in pure air and other ions. This information could be used to estimate suitable proportions for the auxiliary flow AF and sample flow F1 and regulate the amount of auxiliary flow AF so that the sensor element 308 dynamically operates in an appropriate region. The invention has been explained above with reference to the aforementioned embodiments, and several advantages of the invention have been demonstrated. It is clear that the invention is not only restricted to these embodiments, but comprises all possible embodiments within the patent claims.

The features recited in dependent claims are mutually freely combinable unless otherwise explicitly stated.

## Claims

1. An apparatus for providing a regulated filtered sample flow to a sensor element (308), wherein the apparatus is configured to receive a sample flow (F1), the apparatus comprising at least
- an auxiliary flow element (106) for providing the sample flow with an auxiliary flow (AF) to obtain a mixed sample flow (F2),
- a filter element (108) configured to receive the mixed sample flow, said filter element comprising means for charging at least a portion of the particles (102, 104) comprised in the mixed sample flow, a collider electrode (112) for determining a filter current that is indicative of a concentration of at least a portion of the particles in the mixed sample flow, said filter current being inducible at the collider electrode at least partly by the charged particles colliding with said collider electrode, and means for removing at least a portion of particles comprised in the mixed sample flow to provide a filtered sample flow (F3) , and
- a regulating arrangement (110) comprising at least one controller configured to obtain the determined current,
- control the auxiliary flow element and **characterized in that** the regulating arrangement is additionally configured to
∘ regulate a flow rate of the auxiliary flow based on the filter current so that the filter current, and thus the concentration of at least a portion of the particles in the mixed sample flow, is substantially maintained at or near a predetermined value or within a selected range, thereby regulating the concentration of particles in the mixed sample flow and provided filtered sample flow,
∘ receive an indication of an instrument current flowing in a phase transition inducing instrument (304), and based on said received indication of the instrument current, determine when the instrument is deactivated and a received sample flow is a baseline sample flow that is obtained when the filter is essentially free of particles, and perform a calibration procedure comprising measuring a filter current after determining that the instrument has been deactivated and determining the measured filter current as a baseline filter current, and
∘ increase a flow rate of auxiliary flow if a change in the determined current is indicative of an increase in concentration of particles and decreasing flow rate of auxiliary flow if a change in the determined current is indicative of a decrease in concentration of particles, wherein the increasing a flow rate of auxiliary flow occurs at a rate that is higher than the decreasing a flow rate of auxiliary flow.

2. The apparatus of claim 1, wherein the filter element (108) comprises a corona electrode (116) for generating a corona discharge to form charged particles by charging at least a portion of the particles (102, 104) comprised in the mixed sample flow (F2) through the corona discharge, the filter element generating an electric field (E) between said corona electrode and collider electrode (112) for deflecting said charged particles, the filtered sample flow (F3) being provided by directing, through use of the electric field, charged particles having particle size larger than a threshold value away from the filtered sample flow.

3. The apparatus of any previous claim, wherein the sample flow (F1) comprises at least first particles (102) and second particles (104), wherein the first particles have a size smaller than a threshold value and the second particles have a size larger than the threshold value, wherein the filter element (108) is configured to remove at least a portion, preferably essentially all or at least most, of the second particles from the mixed sample flow (F2) to provide the filtered sample flow (F3) comprising first particles.

4. The apparatus of any previous claim, wherein the regulating arrangement (110) is configured to obtain the determined current essentially continuously or at predetermined time intervals.

5. The apparatus of any previous claim, wherein the auxiliary flow (AF) is an essentially particle free flow or wherein the auxiliary flow comprises one or more supplementary constituents being calibration constituents or chemical dopants to modulate characteristics of the sample flow.

6. The apparatus of any previous claim, wherein the regulating arrangement (110) comprises at least one closed loop controller (702, 704) for controlling the auxiliary flow element, the auxiliary flow element (106) preferably comprising a pump and said at least one closed loop controller controlling a valve coupled to said pump.

7. The apparatus of any previous claim, wherein the regulating arrangement (110) is configured to obtain measurement data related to the regulated filtered sample flow (F3) from a sensor element (308) and additionally use said measurement data in the control of the auxiliary flow element (106).

8. The apparatus of any previous claim, wherein the apparatus additionally comprises at least one sensor element (308) for receiving the regulated filtered sample flow (F3) and providing measurement data, wherein the sensor element is selected from the group of a differential ion mobility spectrometer, a field asymmetric ion mobility spectrometer, an ion mobility spectrometer, a travelling wave ion mobility spectrometer, an aspiration ion mobility spectrometer, a mass spectrometer, a time of flight mass spectrometer, an infrared spectrometer, a photo acoustic spectrometer, and a chemically sensitive sensor array based on e.g. metal oxide semiconductors, conducting polymers, quartz crystal microbalance or surface acoustic wave sensors.

9. The apparatus of any previous claim, wherein the indication of the instrument current is obtained utilizing a component configured to provide an inductive or capacitive measurement.

10. The apparatus of any previous claim, wherein the calibration procedure is initiated at a predetermined time after determining that the instrument (304) has been deactivated, wherein said predetermined time is preferably between 1-15 s, more preferably 3-8 s.

11. A method for providing a regulated filtered sample flow to a sensor element (308), the method comprising at least
- receiving a sample flow (F1),
- providing the sample flow with an auxiliary flow (AF) to obtain a mixed sample flow (F2),
- charging at least a portion of the particles (102, 104) comprised in the mixed sample flow,
- determining, as a characteristic being indicative of a concentration of least a portion of the particles in the mixed sample flow, a current that is induced via the charged particles by determining a filter current that is induced at a collider electrode (112) by at least the charged particles colliding with said collider electrode,
- filtering the mixed sample flow by removing at least a portion of said charged particles comprised in the mixed sample flow to provide a filtered sample flow (F3),
the method being **characterized by**
- regulating a flow rate of the auxiliary flow based on the determined current so that the current, and thus the concentration that it is indicative of, is substantially maintained at or near a predetermined value or within a selected range, thereby regulating the concentration of particles in the mixed sample flow and the provided filtered sample flow,
- receiving an indication of an instrument current flowing in a phase transition inducing instrument (304),
- based on said received indication of the instrument current, determining when the instrument is deactivated and a received sample flow is a baseline sample flow that is obtained when the filter is essentially free of particles,
- performing a calibration procedure after determining that the instrument has been deactivated, said calibration procedure comprising measuring a filter current and determining the measured filter current as a baseline filter current, and
- increasing a flow rate of auxiliary flow if a change in the determined current is indicative of an increase in concentration of particles and decreasing flow rate of auxiliary flow if a change in the determined current is indicative of a decrease in concentration of particles, wherein the increasing a flow rate of auxiliary flow occurs at a rate that is higher than the decreasing a flow rate of auxiliary flow.

## Patentansprüche

1. Vorrichtung zum Bereitstellen eines geregelten gefilterten Probenflusses an ein Sensorelement (308), wobei die Vorrichtung konfiguriert ist, um einen Probenfluss (F1) zu empfangen, wobei die Vorrichtung mindestens Folgendes umfasst:
- ein Nebenflusselement (106) zum Versehen des Probenflusses mit einem Nebenfluss (AF), um einen gemischten Probenfluss (F2) zu erhalten,
- ein Filterelement (108), das konfiguriert ist, um den gemischten Probenfluss zu empfangen, wobei das Filterelement Mittel zum Aufladen von mindestens einem Teil der Partikel (102, 104), die in dem gemischten Probenfluss enthalten sind, eine Beschleunigerelektrode (112) zum Bestimmen eines Filterstroms, der auf eine Konzentration von mindestens einem Teil der Partikel in dem gemischten Probenfluss hindeutet, wobei der Filterstrom an der Beschleunigerelektrode mindestens teilweise durch die geladenen Partikel induzierbar ist, die mit der Beschleunigerelektrode kollidieren, und Mittel zum Entfernen von mindestens einem Teil der Partikel, die in dem gemischten Probenfluss enthalten sind, um einen gefilterten Probenfluss (F3) bereitzustellen, umfasst, und
- eine Regelanordnung (110), die mindestens eine Steuerung umfasst, die konfiguriert ist, um den bestimmten Strom zu erhalten,
- Steuern des Nebenflusselements, und **dadurch gekennzeichnet, dass** die Regelanordnung zusätzlich konfiguriert ist zum
o Regeln einer Flussrate des Nebenflusses basierend auf dem Filterstrom, sodass der Filterstrom und somit die Konzentration von mindestens einem Teil der Partikel in dem gemischten Probenfluss im Wesentlichen bei oder nahe einem vorbestimmten Wert oder innerhalb eines ausgewählten Bereichs aufrechterhalten wird, wodurch die Partikelkonzentration in dem gemischten Probenfluss geregelt wird und ein gefilterter Probenfluss bereitgestellt wird,
o Empfangen einer Angabe eines Instrumentenstroms, der in einem Phasenübergang induzierenden Instrument (304) fließt, und, basierend auf der empfangenen Angabe des Instrumentenstroms, Bestimmen, wann das Instrument deaktiviert ist und ein empfangener Probenfluss ein Basisprobenfluss ist, der erhalten wird, wenn der Filter im Wesentlichen frei von Partikeln ist, und Durchführen einer Kalibrierungsprozedur, die das Messen eines Filterstroms nach dem Bestimmen, dass das Instrument deaktiviert wurde, umfasst, und
Bestimmen des gemessenen Filterstroms als Basisfilterstrom, und
o Erhöhen einer Flussrate des Nebenflusses, wenn eine Änderung des bestimmten Stroms auf eine Erhöhung der Partikelkonzentration hindeutet, und Verringern der Flussrate des Nebenflusses, wenn eine Änderung des bestimmten Stroms auf eine Verringerung der Partikelkonzentration hindeutet, wobei das Erhöhen der Flussrate des Nebenflusses mit einer Rate erfolgt, die höher ist als das Verringern der Flussrate des Nebenflusses.

2. Vorrichtung nach Anspruch 1, wobei das Filterelement (108) eine Koronaelektrode (116) zum Erzeugen einer Koronaentladung umfasst, um geladene Partikel durch Aufladen von mindestens einem Teil der Partikel (102, 104), die in dem gemischten Probenfluss (F2) enthalten sind, durch die Koronaentladung zu bilden, wobei das Filterelement ein elektrisches Feld (E) zwischen der Koronaelektrode und der Beschleunigerelektrode (112) zum Ablenken der geladenen Partikel erzeugt, wobei der gefilterte Probenfluss (F3) bereitgestellt wird, indem geladene Partikel, die eine Partikelgröße aufweisen, die größer als ein Schwellenwert ist, durch Verwendung des elektrischen Feldes von dem gefilterten Probenfluss weggeleitet werden.

3. Vorrichtung nach irgendeinem der vorhergehenden Ansprüche, wobei der Probenfluss (F1) mindestens erste Partikel (102) und zweite Partikel (104) umfasst, wobei die ersten Partikel eine Größe kleiner als ein Schwellenwert aufweisen und die zweiten Partikel eine Größe größer als der Schwellenwert aufweisen, wobei das Filterelement (108) konfiguriert ist, um mindestens einen Teil, vorzugsweise im Wesentlichen alle oder zumindest die meisten, der zweiten Partikel aus dem gemischten Probenfluss (F2) zu entfernen, um den gefilterten Probenfluss (F3) bereitzustellen, der erste Partikel umfasst.

4. Vorrichtung nach irgendeinem der vorhergehenden Ansprüche, wobei die Regelanordnung (110) konfiguriert ist, um den bestimmten Strom im Wesentlichen kontinuierlich oder in vorbestimmten Zeitintervallen zu erhalten.

5. Vorrichtung nach irgendeinem der vorhergehenden Ansprüche, wobei der Nebenfluss (AF) ein im Wesentlichen partikelfreier Fluss ist oder wobei der Nebenfluss einen oder mehrere zusätzliche Bestandteile umfasst, die Kalibrierungsbestandteile oder chemische Dotierstoffe sind, um die Eigenschaften des Probenflusses zu modulieren.

6. Vorrichtung nach irgendeinem der vorhergehenden Ansprüche, wobei die Regelanordnung (110) mindestens eine Steuerung (702, 704) mit geschlossenem Regelkreis zum Steuern des Nebenflusselements umfasst, wobei das Nebenflusselement (106) bevorzugt eine Pumpe umfasst und die mindestens eine Steuerung mit geschlossenem Regelkreis ein mit der Pumpe gekoppeltes Ventil steuert.

7. Vorrichtung nach irgendeinem der vorhergehenden Ansprüche, wobei die Regelanordnung (110) konfiguriert ist, um Messdaten bezüglich des geregelten gefilterten Probenflusses (F3) von einem Sensorelement (308) zu erhalten und zusätzlich die Messdaten bei der Steuerung des Nebenflusselements (106) zu verwenden.

8. Vorrichtung nach irgendeinem der vorhergehenden Ansprüche, wobei die Vorrichtung zusätzlich mindestens ein Sensorelement (308) zum Empfangen des geregelten gefilterten Probenflusses (F3) und zum Bereitstellen von Messdaten umfasst, wobei das Sensorelement aus der Gruppe bestehend aus einem Differential-Ionenmobilitätsspektrometer, einem feldasymmetrischen Ionenmobilitätsspektrometer, einem Ionenmobilitätsspektrometer, einem Wanderfeld-Ionenmobilitätsspektrometer, einem Aspirations-Ionenmobilitätsspektrometer, einem Massenspektrometer, einem Flugzeitmassenspektrometer, einem Infrarotspektrometer, einem photoakustischen Spektrometer und einer chemisch empfindlichen Sensoranordnung, die auf z. B. Metalloxidhalbleitern, leitenden Polymeren, einer Quarzkristall-Mikrowaage oder Oberflächenwellen-Sensoren basiert, ausgewählt ist.

9. Vorrichtung nach irgendeinem der vorhergehenden Ansprüche, wobei die Angabe des Instrumentenstroms durch Nutzen einer Komponente erhalten wird, die konfiguriert ist, um eine induktive oder kapazitive Messung bereitzustellen.

10. Vorrichtung nach irgendeinem der vorhergehenden Ansprüche, wobei die Kalibrierungsprozedur zu einer vorbestimmten Zeit nach dem Bestimmen, dass das Instrument (304) deaktiviert wurde, eingeleitet wird, wobei die vorbestimmte Zeit bevorzugt zwischen 1-15 s, stärker bevorzugt 3-8 s, liegt.

11. Verfahren zum Bereitstellen eines geregelten gefilterten Probenflusses an ein Sensorelement (308), wobei das Verfahren mindestens Folgendes umfasst:
- Empfangen eines Probenflusses (F1),
- Versehen des Probenflusses (AF) mit einem Nebenfluss, um einen gemischten Probenfluss (F2) zu erhalten,
- Aufladen mindestens eines Teils der Partikel (102, 104), die in dem gemischten Probenfluss enthalten sind,
- Bestimmen, als eine Eigenschaft, die auf eine Konzentration von mindestens einem Teil der Partikel in dem gemischten Probenfluss hindeutet, eines Stroms, der über die geladenen Partikel induziert wird, durch Bestimmen eines Filterstroms, der an einer Beschleunigerelektrode (112) durch mindestens die geladenen Partikel induziert wird, die mit der Beschleunigerelektrode kollidieren,
- Filtern des gemischten Probenflusses durch Entfernen von mindestens einem Teil der geladenen Partikel, die in dem gemischten Probenfluss enthalten sind, um einen gefilterten Probenfluss (F3) bereitzustellen,
wobei das Verfahren **gekennzeichnet ist durch**
- Regeln einer Flussrate des Nebenflusses basierend auf dem bestimmten Strom, sodass der Strom und somit die Konzentration, auf die er hindeutet, im Wesentlichen bei oder nahe einem vorbestimmten Wert oder innerhalb eines ausgewählten Bereichs aufrechterhalten wird, wodurch die Partikelkonzentration in dem gemischten Probenfluss und dem bereitgestellten gefilterten Probenfluss geregelt wird,
- Empfangen einer Angabe eines Instrumentenstroms, der in einem Phasenübergang induzierenden Instrument (304) fließt,
- basierend auf der empfangenen Angabe des Instrumentenstroms, Bestimmen, wann das Instrument deaktiviert ist und ein empfangener Probenfluss ein Basisprobenfluss ist, der erhalten wird, wenn der Filter im Wesentlichen frei von Partikeln ist,
- Durchführen einer Kalibrierungsprozedur nach dem Bestimmen, dass das Instrument deaktiviert wurde, wobei die Kalibrierungsprozedur das Messen eines Filterstroms und das Bestimmen des gemessenen Filterstroms als einen Basisfilterstrom umfasst, und
- Erhöhen einer Flussrate des Nebenflusses, wenn eine Änderung des bestimmten Stroms auf eine Erhöhung der Partikelkonzentration hindeutet, und Verringern der Flussrate des Nebenflusses, wenn eine Änderung des bestimmten Stroms auf eine Verringerung der Partikelkonzentration hindeutet, wobei das Erhöhen der Flussrate des Nebenflusses mit einer Rate erfolgt, die höher ist als das Verringern der Flussrate des Nebenflusses.

## Revendications

1. Appareil pour fournir un flux d'échantillon filtré et régulé à un élément capteur (308), dans lequel l'appareil est configuré pour recevoir un flux d'échantillon (F1), l'appareil comprenant au moins
- un élément d'écoulement auxiliaire (106) pour fournir au flux d'échantillon un flux auxiliaire (AF) pour obtenir un flux d'échantillon mixte (F2),
- un élément filtrant (108) configuré pour recevoir le flux d'échantillon mixte, ledit élément filtrant comprenant des moyens pour charger au moins une partie des particules (102, 104) comprises dans le flux d'échantillon mixte, une électrode de collisionneur (112) pour déterminer un courant de filtre qui est indicatif d'une concentration d'au moins une partie des particules dans le flux d'échantillon mixte, ledit courant de filtre étant inductible au niveau de l'électrode de collisionneur au moins en partie par les particules chargées entrant en collision avec ladite électrode de collisionneur, et des moyens pour éliminer au moins une partie des particules comprises dans le flux d'échantillon mixte pour fournir un flux d'échantillon filtré (F3), et
- un agencement de régulation (110) comprenant au moins un dispositif de commande configuré pour obtenir le courant déterminé,
- la commande de l'élément d'écoulement auxiliaire et **caractérisé en ce que** l'agencement de régulation est en outre configuré pour
o réguler un débit du flux auxiliaire sur la base du courant de filtre de sorte que le courant de filtre, et donc la concentration d'au moins une partie des particules dans le flux d'échantillon mixte, soit sensiblement maintenu à ou près d'une valeur prédéterminée ou dans une plage sélectionnée, régulant ainsi la concentration de particules dans le flux d'échantillon mixte et le flux d'échantillon filtré fourni,
o recevoir une indication d'un courant d'instrument s'écoulant dans un instrument induisant une transition de phase (304), et sur la base de ladite indication reçue du courant d'instrument, déterminer quand l'instrument est désactivé et un flux d'échantillon reçu est un flux d'échantillon de base qui est obtenu lorsque le filtre est essentiellement exempt de particules, et effectuer une procédure d'étalonnage comprenant la mesure d'un courant de filtre après la détermination que l'instrument a été désactivé et la détermination du courant de filtre mesuré comme courant de filtre de base, et
o augmenter un débit de flux auxiliaire si un changement dans le courant déterminé indique une augmentation de la concentration de particules et la diminution du débit de flux auxiliaire si un changement dans le courant déterminé indique une diminution de la concentration de particules, dans lequel l'augmentation d'un débit de flux auxiliaire se produit à un taux qui est supérieur à la diminution d'un débit de flux auxiliaire.

2. Appareil selon la revendication 1, dans lequel l'élément filtrant (108) comprend une électrode corona (116) pour générer une décharge corona pour former des particules chargées en chargeant au moins une partie des particules (102, 104) comprises dans le flux d'échantillon mixte (F2) à travers la décharge corona, l'élément filtrant générant un champ électrique (E) entre ladite électrode corona et l'électrode de collisionneur (112) pour dévier lesdites particules chargées, le flux d'échantillon filtré (F3) étant fourni en dirigeant, par l'utilisation du champ électrique, des particules chargées ayant une taille de particules supérieure à une valeur seuil à l'écart du flux d'échantillon filtré.

3. Appareil selon une quelconque revendication précédente, dans lequel le flux d'échantillon (F1) comprend au moins des premières particules (102) et des secondes particules (104), dans lequel les premières particules ont une taille inférieure à une valeur seuil et les secondes particules ont une taille supérieure à la valeur seuil, dans lequel l'élément filtrant (108) est configuré pour éliminer au moins une partie, de préférence essentiellement la totalité ou au moins la plupart, des secondes particules du flux d'échantillon mixte (F2) pour fournir le flux d'échantillon filtré (F3) comprenant des premières particules.

4. Appareil selon une quelconque revendication précédente, dans lequel l'agencement de régulation (110) est configuré pour obtenir le courant déterminé essentiellement en continu ou à des intervalles de temps prédéterminés.

5. Appareil selon une quelconque revendication précédente, dans lequel le flux auxiliaire (AF) est un flux essentiellement exempt de particules ou dans lequel le flux auxiliaire comprend un ou plusieurs constituants supplémentaires qui sont des constituants d'étalonnage ou des dopants chimiques pour moduler des caractéristiques du flux d'échantillon.

6. Appareil selon une quelconque revendication précédente, dans lequel l'agencement de régulation (110) comprend au moins un dispositif de commande en boucle fermée (702, 704) pour commander l'élément d'écoulement auxiliaire, l'élément d'écoulement auxiliaire (106) comprenant de préférence une pompe et ledit au moins un dispositif de commande en boucle fermée commandant une vanne couplée à ladite pompe.

7. Appareil selon une quelconque revendication précédente, dans lequel l'agencement de régulation (110) est configuré pour obtenir des données de mesure relatives au flux d'échantillon filtré et régulé (F3) à partir d'un élément capteur (308) et utiliser en outre lesdites données de mesure dans la commande de l'élément d'écoulement auxiliaire (106).

8. Appareil selon une quelconque revendication précédente, dans lequel l'appareil comprend en outre au moins un élément capteur (308) pour recevoir le flux d'échantillon filtré et régulé (F3) et fournir des données de mesure, dans lequel l'élément capteur est sélectionné dans le groupe comprenant un spectromètre de mobilité ionique différentiel, un spectromètre de mobilité ionique asymétrique de champ, un spectromètre de mobilité ionique, un spectromètre de mobilité ionique à ondes progressives, un spectromètre de mobilité ionique par aspiration, un spectromètre de masse, un spectromètre de masse à temps de vol, un spectromètre infrarouge, un spectromètre photoacoustique et un réseau de capteurs chimiquement sensibles basés sur, par exemple, des semiconducteurs à oxyde métallique, des polymères conducteurs, une microbalance à cristal de quartz ou des capteurs à ondes acoustiques de surface.

9. Appareil selon une quelconque revendication précédente, dans lequel l'indication du courant d'instrument est obtenue en utilisant un composant configuré pour fournir une mesure inductive ou capacitive.

10. Appareil selon une quelconque revendication précédente, dans lequel la procédure d'étalonnage est initiée à un temps prédéterminé après détermination que l'instrument (304) a été désactivé, dans lequel ledit temps prédéterminé est de préférence compris entre 1 et 15 s, plus préférablement entre 3 et 8 s.

11. Procédé pour fournir un flux d'échantillon filtré et régulé à un élément capteur (308), le procédé comprenant au moins
- la réception d'un flux d'échantillon (F1),
- la fourniture au flux d'échantillon d'un flux auxiliaire (AF) pour obtenir un flux d'échantillon mixte (F2),
- le chargement d'au moins une partie des particules (102, 104) comprises dans le flux d'échantillon mixte,
- la détermination, en tant que caractéristique indicative d'une concentration d'au moins une partie des particules dans le flux d'échantillon mixte, d'un courant qui est induit via les particules chargées en déterminant un courant de filtre qui est induit au niveau d'une électrode de collisionneur (112) par au moins les particules chargées entrant en collision avec ladite électrode de collisionneur,
- le filtrage du flux d'échantillon mixte en éliminant au moins une partie desdites particules chargées comprises dans le flux d'échantillon mixte pour fournir un flux d'échantillon filtré (F3),
le procédé étant **caractérisé par**
- la régulation d'un débit du flux auxiliaire sur la base du courant déterminé de sorte que le courant, et donc la concentration qu'il indique, soit sensiblement maintenu à ou près d'une valeur prédéterminée ou dans une plage sélectionnée, régulant ainsi la concentration de particules dans le flux d'échantillon mixte et le flux d'échantillon filtré fourni,
- la réception d'une indication d'un courant d'instrument s'écoulant dans un instrument induisant une transition de phase (304),
- sur la base de ladite indication reçue du courant d'instrument, le fait de déterminer quand l'instrument est désactivé et un flux d'échantillon reçu est un flux d'échantillon de base qui est obtenu lorsque le filtre est essentiellement exempt de particules,
- la réalisation d'une procédure d'étalonnage après avoir déterminé que l'instrument a été désactivé, ladite procédure d'étalonnage comprenant la mesure d'un courant de filtre et la détermination du courant de filtre mesuré comme courant de filtre de base, et
- l'augmentation d'un débit de flux auxiliaire si un changement dans le courant déterminé indique une augmentation de la concentration de particules et la diminution du débit de flux auxiliaire si un changement dans le courant déterminé indique une diminution de la concentration de particules, dans lequel l'augmentation d'un débit de flux auxiliaire se produit à un taux qui est supérieur à la diminution d'un débit de flux auxiliaire.
